# EUROPÄISCHE PATENTSCHRIFT

(11) **EP 2 847 010 B1**
(45) Veröffentlichungstag und Bekanntmachung des Hinweises auf die Patenterteilung: **21.11.2018**
(21) Anmeldenummer: 13719559.0
(22) Anmeldetag: 01.05.2013
(51) Int. Cl.: B60R 9/06, B60R 9/10, B60D 1/52

(54) **LASTENTRÄGER MIT EINER KUPPLUNGSVORRICHTUNG**
LOAD CARRIER HAVING A COUPLING DEVICE
PORTE-CHARGE ÉQUIPÉ D'UN DISPOSITIF D'ACCOUPLEMENT

(30) Priorität: 11.05.2012 DE 202012101729 U
(43) Veröffentlichungstag der Anmeldung: 18.03.2015
(73) Patentinhaber: I-Racks GmbH, 88284 Wolpertswende (DE)
(72) Erfinder: ZIOLA, Stefan, 88284 Wolpertswende (DE)
(74) Vertreter: Patentanwälte Hosenthien-Held und Dr. Held
(86) Internationale Anmeldenummer: PCT/EP2013/059062
(87) Internationale Veröffentlichungsnummer: WO 2013/167433

(56) Entgegenhaltungen:
- DE-U1-202006 018 365
- US-A1- 2004 256 429
- US-A1- 2007 145 088
- US-B1- 6 974 147

## Beschreibung

Die Erfindung betrifft einen Lastenträger, insbesondere Heckträger, mit einer Kupplungsvorrichtung zur Befestigung an einem Kraftfahrzeug, welches eine Kupplung mit einer quadratischen Öffnung entsprechend SAE J684 aufweist, gemäß dem Oberbegriff des Anspruches 1.

Aus der US 7,240,816 B2 ist ein Lastenträger bekannt, bei dem ein zentraler Träger hochklappbare Trägerarme lagert, an welchen Stellbereiche für Fahrräder vorgesehen sind, und der eine Stütze mit hakenförmigen Haltern zum Halten des oder der Fahrräder trägt. Die Anbringung des zentralen Trägers an einer US-Kupplung mit quadratischer Öffnung ist der zentrale Träger mit entsprechendem in die Öffnung passenden Querschnitt ausgebildet. Das Ende wird in die Öffnung eingeführt und mit einem Bolzen gesichert. Hierbei ist die Montage und Fixierung des Lastenträgers relativ mühsam. Ferner muss der Bolzen zusätzlich gesichert werden, beispielsweise mit einem Splint oder einem Schloss.

Der vorstehende Lastenträger lässt somit noch Wünsche offen, insbesondere in Hinblick auf die Fixierung an einem Fahrzeug mit einer aufnahmeartigen Kupplung (d.h. "receiver type hitch"). Ein gattungsgemäßer Lastenträger ist aus der US 2007/0145088 A1 bekannt.

Aus der DE 10 2010 036 898 A1 ist ferner ein zusammenklappbarer Lastenträger zur Anbringung an einer Anhängerkupplung mit einem kugelförmigen Kopf bekannt, der zwei hochklappbare Stellbereiche hat, auf welche bis zu zwei Fahrräder stellbar sind. Der Lastenträger ist durch eine Basis und eine mit der Basis schwenkbar verbundene Trägeranordnung gebildet. Hierbei dient einer der Trägerrahmen der Bewegung eines Spannbügels über den kugelförmigen Kopf der Anhängekupplung, der andere Trägerrahmen dient dem eigentlichen Spannen. Eine entsprechende Ausgestaltung kann im Falle von Fehlbedienungen zu Beschädigungen führen. Insbesondere muss eine vorgegebene Reihenfolge in Bezug auf das Herunterklappen der Trägerrahmen bei der Bedienung eingehalten werden.

Der Erfindung liegt daher die Aufgabe zu Grunde, einen Lastenträger zu verbessern, insbesondere in Hinblick auf die Montage und Fixierung an einer aufnahmeartigen Kupplung eines Kraftfahrzeugs.

Diese Aufgabe wird erfindungsgemäß durch einen Lastenträger mit den Merkmalen des Anspruchs 1 gelöst. Vorteilhafte Ausgestaltungen sind Gegenstand der Unteransprüche.

Durch das Vorsehen eines zusammenklappbaren Lastenträgers, bei welchem das Ausfahren und Verriegeln mit einer Verriegelungsvorrichtung durch eine Schwenkbewegung eines einzigen als Bedienelement dienenden Hebels um eine Schwenkachse erfolgt, wobei der als Bedienelement dienende Hebel gleichzeitig auch den Stellbereich bildet, ergibt sich eine sehr einfache Betätigung der Verriegelungsvorrichtung. Insbesondere ist ein derartiger Hebel leicht zugänglich. Dadurch, dass eine Bewegung zum Verriegeln genutzt wird, die auch ohne Verriegelung erforderlich ist, um den Lastenträger nutzbar zu machen, ergibt sich eine vereinfachte, sichere Montage. Insbesondere kann durch die Verwendung eines Stellbereichs als Bedienelement sichergestellt werden, dass der Lastenträger korrekt verriegelt ist, da der Nutzer so einfach feststellen kann, ob der Lastenträger richtig aufgeklappt und damit benutzungsbereit ist.

Ist die Schwenkbewegung des Hebels mittels einer Getriebeanordnung an die Kupplungsvorrichtung übertragbar, und setzt die Getriebeanordnung die Schwenkbewegung des Hebels nach unten in ein Ausfahren mindestens eines Riegels, welcher Teil der Verriegelungsvorrichtung ist, und die Schwenkbewegung des Hebels nach oben in eine Einfahrbewegung besagten Riegels um, so ergibt sich eine einfache technische Umsetzung der Schwenkbewegung in eine verriegelnde Bewegung.

Vorzugsweise ist als Teil der Getriebeanordnung eine Nockenwelle vorgesehen, welche mindestens einen Nocken aufweist, der mit dem Riegel zusammenwirkt. Insbesondere bevorzugt ist ein Doppelnocken, gebildet durch zwei um 180° versetzt angeordnete Nocken, vorgesehen. Hierbei wirkt jeder der Nocken mit einem Riegel zusammen.

Obwohl im Folgenden als Lastenträger auf sogenannte Heckträger Bezug genommen wird, kann bei Sonderfahrzeugen die Anhängerkupplung auch an einer anderen Seite des Fahrzeugs vorgesehen sein, beispielsweise an der Vorderseite. Selbstverständlich kann der erfindungsgemäße Lastenträger auch hierfür verwendet werden.

Im Folgenden ist die Erfindung anhand eines Ausführungsbeispiels unter Bezugnahme auf die beiliegende Zeichnung näher erläutert. In der Zeichnung zeigen:
Fig. 1 eine perspektivische explosionsartige Ansicht des erfindungsgemäßen Lastenträgers im betriebsbereiten Zustand mit einem Kraftfahrzeug,
Fig. 2a eine Fig. 1 entsprechende, perspektivische Ansicht des Lastenträgers im zusammengeklappten Zustand,
Fig. 2b eine Fig. 1 entsprechende perspektivische Ansicht des betriebsbereiten Lastenträgers in nach hinten gekipptem Zustand,

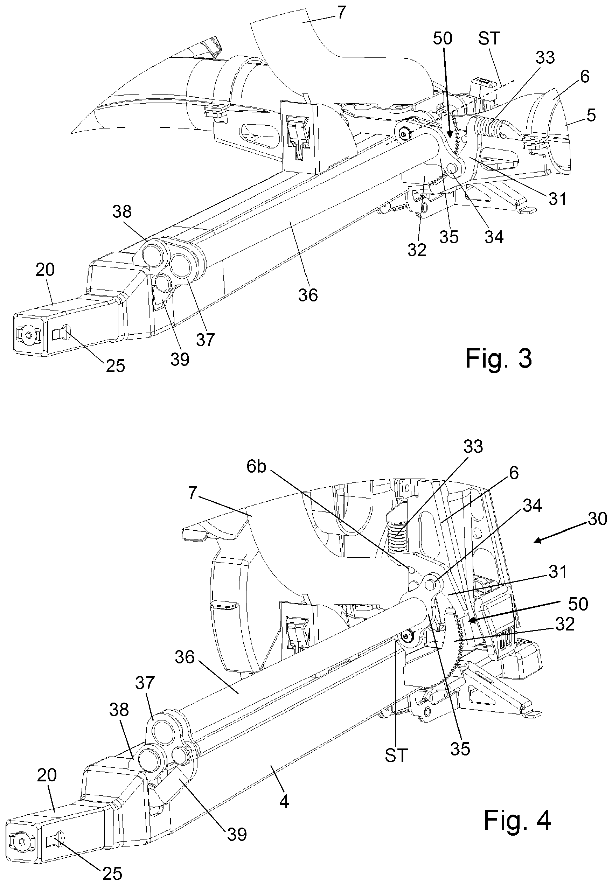

Fig. 3 eine Detailansicht der Kupplungsvorrichtung des Lastenträgers von Fig. 1 im betriebsbereiten Zustand aus anderer Perspektive,
Fig. 4 eine Fig. 3 entsprechende Ansicht im zusammengeklappten Zustand,

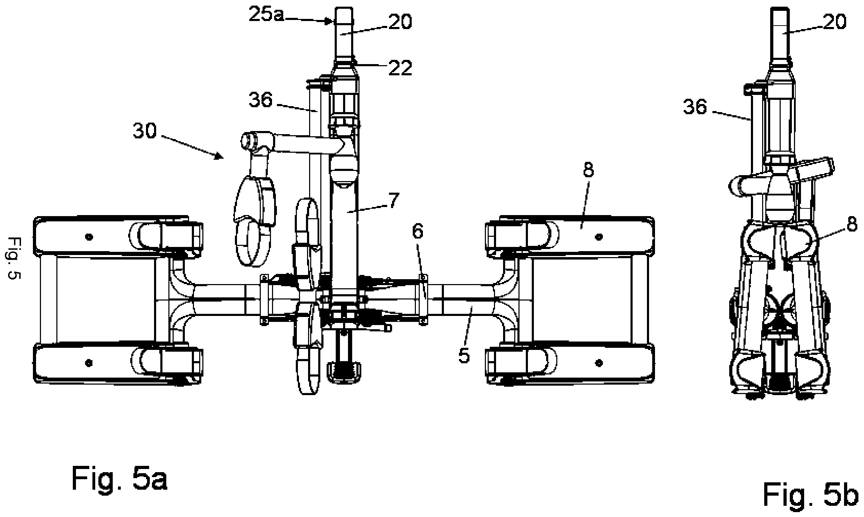

Fig. 5a eine Draufsicht auf den Lastenträger von Fig. 1 im betriebsbereiten Zustand,
Fig. 5b eine Fig. 5a entsprechende Ansicht im zusammengeklappten Zustand,

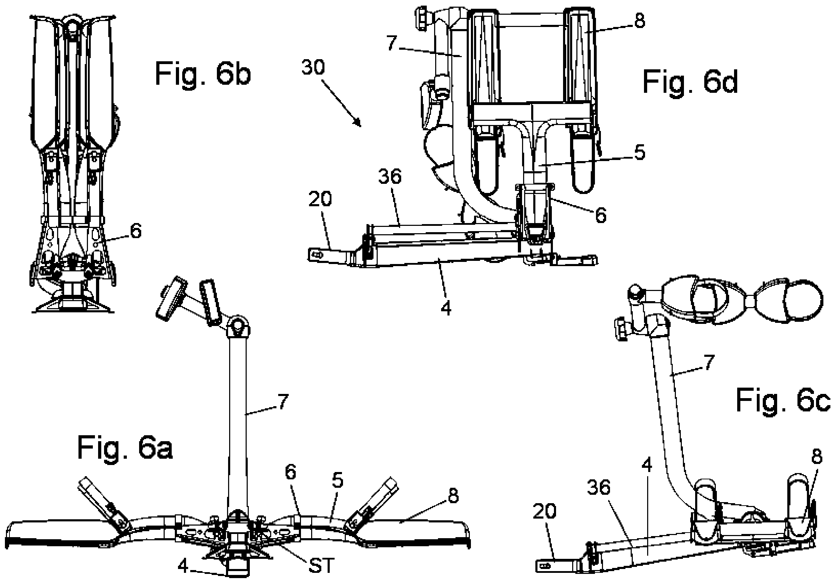

Fig. 6a eine Ansicht des Lastenträgers im betriebsbereiten Zustand von hinten,
Fig. 6b eine Fig. 6a entsprechende Ansicht im zusammengeklappten Zustand,
Fig. 6c eine Seitenansicht des Lastenträgers im betriebsbereiten Zustand von links,
Fig. 6d eine Fig. 6c entsprechende Ansicht im zusammengeklappten Zustand,

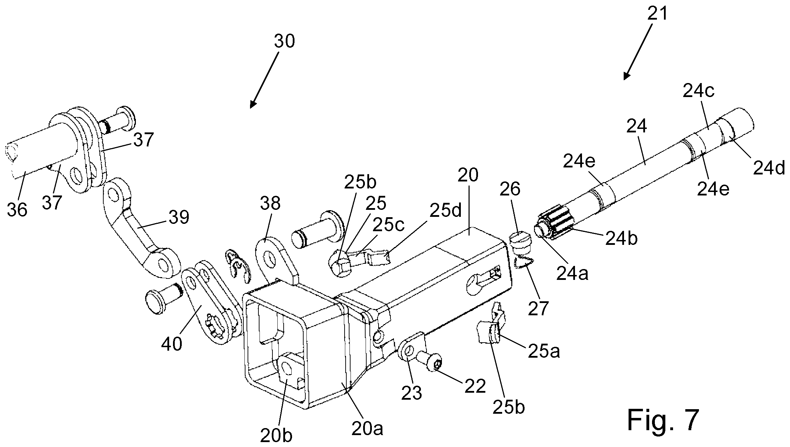

Fig. 7 eine Explosionsdarstellung der wesentlichen Teile der Kupplungsvorrichtung,
Fig. 8a eine Ansicht der betriebsbereiten Kupplungsvorrichtung in Fahrtrichtung,
Fig. 8b einem Schnitt entlang Linie A-A in Fig. 8a,
Fig. 8c eine Fig. 8b entsprechende Darstellung mit schematischer Darstellung von Kräften,
Fig. 9a einen Schnitt entlang Linie B-B in Fig. 8a,
Fig. 9b einen Schnitt entlang Linie C-C in Fig. 8b,
Fig. 9c einen Schnitt entlang Linie D-D in Fig. 9a,
Fig. 10a eine Ansicht der Kupplungsvorrichtung in Fahrtrichtung bei zusammengeklapptem Lastenträger,
Fig. 10b einem Schnitt entlang Linie A-A in Fig. 10a,
Fig. 11a einen Schnitt entlang Linie B-B in Fig. 10a,
Fig. 11b einen Schnitt entlang Linie C-C in Fig. 10b,
Fig. 11c einen Schnitt entlang Linie D-D in Fig. 11a,
Fig. 12a eine Detailansicht der Kraftbegrenzung der Kupplungsvorrichtung im ausgerückten Zustand,
Fig. 12b eine Detailansicht der Kraftbegrenzung der Kupplungsvorrichtung im eingerückten Zustand, und
Fig. 13 eine Seitenansicht einer weiter zusammenfaltbaren Variante des Lastenträgers von Fig. 1.

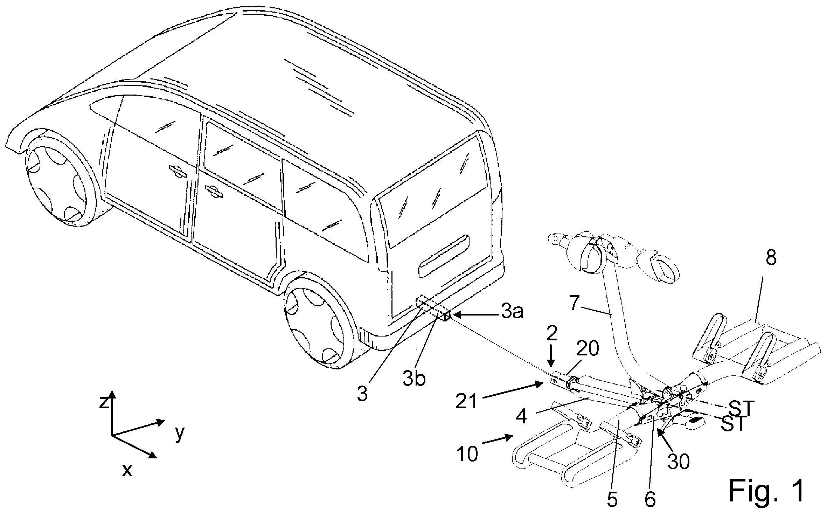

Bei der folgenden Beschreibung wird von einem als Heckträger an einer Anhängerkupplung angebrachten Lastenträger 1, wie in Fig. 1 explosionsartig dargestellt, ausgegangen. Die Richtungsangaben beziehen sich auf die normale Fahrtrichtung des Fahrzeugs, wobei x die Richtung entgegen der Fahrtrichtung, y die Querrichtung und die vertikale Richtung mit z bezeichnet.

Ein zusammenklappbarer Lastenträger 1, der vorliegend dem Transport von zwei Fahrrädern oder zum Transport sonstiger Lasten, wie beispielsweise Skiern, Snowboards, einer Heckbox, dienen kann, ist mit Hilfe einer Kupplungsvorrichtung 2 an einer aufnahmeartigen Kupplung 3 eines Kraftfahrzeugs anbringbar. Die aufnahmeartige Kupplung 3 weist hierbei einen im Wesentlichen als Rechteckrohr ausgebildeten Endbereich mit einer nach hinten offenen Aufnahmeöffnung 3a mit quadratischem Querschnitt sowie zwei seitlichen Verriegelungsöffnungen 3b auf. Vorliegend handelt es sich um einen 1.25" Hitch Mount Receiver, welcher üblicherweise für die Anhängervorrichtungen Class I und Class II verwendet wird. Die Ausgestaltung kann jedoch auch entsprechend größer für einen 2" Hitch Mount Receiver für Class III und Class IV oder aber auch für einen 2.5" Hitch Mount Receiver für Class V vorgesehen sein. Insbesondere im Falle der größeren Kupplungen können anstelle der nachfolgend beschriebenen zwei Fahrräder auch beispielsweise vier oder fünf Fahrräder transportiert werden. Ferner können bekannte Reduzierhülsen für die größeren Kupplungen genutzt werden, so dass hierfür auch die Kupplungsvorrichtung 2 für 1.25" Hitch Mount Receiver verwendet werden kann.

Der Lastenträger 1 hat einen zentralen Träger 4, welcher bei einem korrekt an einem Kraftfahrzeug als Heckträger angebrachten Lastenträger 1 in Fahrzeuglängsrichtung verlaufend ausgerichtet ist und im Querschnitt im Wesentlichen die Gestalt eines geschlossenen Hohlprofils aufweist. An einem Ende des zentralen Trägers 4 ist die Kupplungsvorrichtung 2 angeordnet, am anderen Ende des zentralen Trägers 4 ist der zusammenklappbar ausgebildete, den eigentlichen Ladebereich bildende Teil des Lastenträgers 1 vorgesehen. Hierfür sind zwei Trägerarme 5 mittels Konsolen 6 vorliegend zentrisch bezüglich der Mittellängsachse des zentralen Trägers 4 verschwenkbar um zwei voneinander beabstandete Trägerarm-Schwenkachsen ST angebracht, wobei die Trägerarme 5 in ihrer zusammengeklappten Stellung im Wesentlichen parallel zueinander angeordnet sind und in ihrer aufgeklappten, einsatzbereiten Stellung im Wesentlichen miteinander fluchten. Ein etwa um 90° gebogen ausgebildeter Stützbügel 7 ist mit seinem horizontal verlaufenden Schenkel oberhalb des zentralen Trägers 4, zwischen den schwenkbar angebrachten Endbereichen der Trägerarme 5 angeordnet und erstreckt sich mit seinem vertikal verlaufenden Schenkel etwas beabstandet von der Kupplungsvorrichtung 2 nach oben.

Obwohl nicht näher beschrieben, können bei einer alternativen Ausgestaltung die Konsolen samt Trägerarmen auch auf der Mittellängsachse des zentralen Trägers angeordnet sein, d.h. die beiden Trägerarm-Schwenkachsen fluchten miteinander.

Sollen mit dem aufgeklappten Lastenträger 1 beispielsweise zwei Fahrräder transportiert werden, so stehen dieselben parallel zueinander, in y-Richtung ausgerichtet, mit ihren Rädern auf entsprechend ausgebildeten Stellbereichen 8 an den Trägerarmen 5 und werden im oberen Bereich mittels nicht im Detail dargestellter Haltern, Schellen, Bügeln o.ä. mit dem Stützbügel 7 auf an sich bekannte Weise verbunden. Die Trägerarme 5 sind hierbei derart ausgebildet, dass sie um ihre Längsachse drehbar in der jeweiligen Konsole 6 angeordnet sind, so dass die hieran gabelförmig ausgebildeten Stellbereiche 8 für die zu befördernde Last im Nichtgebrauchsfall platzsparend ausgerichtet werden können. Bei Gebrauch sind die Trägerarme 5 jedoch formschlüssig mit dem Stützbügel 7 verbunden und in ihren Konsolen 6 gelagert. Alternativ können die Trägerarme auch starr in den Konsolen angeordnet sein oder ggf. auch einstückig hiermit ausgebildet sein. Aufgrund ihrer Funktion wird auf die Gesamtheit von Konsole 6 und Trägerarm 5 sowie den Stellbereich 8 auch als Hebel 10 eingegangen. Zum Betätigen kann ein entsprechender, nicht dargestellter Griffbereich an allen Bereichen ausgebildet oder steif hiermit verbunden sein.

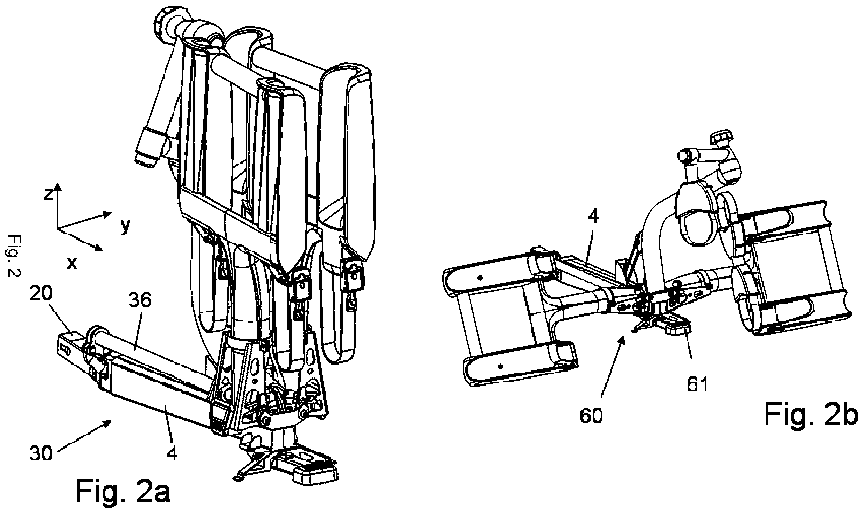

In der aufgeklappten, betriebsbereiten Stellung des Lastenträgers 1 ist vorliegend, wie in Fig. 2b dargestellt, ein Kippen der Trägerarme 5 mit ihren Stellbereichen 8 samt Stützbügel 7 nach hinten möglich, so dass beispielsweise der Kofferraum zugänglich ist. Hierbei sind die Trägerarme 5 innerhalb der Konsolen 6 drehbar. Eine Sicherung, die zwischen dem zentralen Träger 4 und der Krümmungsaußenseite des Stützbügels angeordnet ist, begrenzt den Kippwinkel. Da die Trägerarme 5 miteinander verbunden sind, ist im zusammengeklappten Zustand des Lastenträgers 1 kein Kippen möglich, da ein Drehen innerhalb der Konsolen 6 aufgrund des Verbindungsbereichs zwischen den Trägerarmen 5 verhindert wird. Eine zusätzliche Sicherung kann vorgesehen sein, um ein ungewolltes Kippen im betriebsbereiten Zustand zu verhindern. Zum Kippen, beispielsweise um an den Kofferraum des Fahrzeugs zu gelangen, wird die gegebenenfalls vorhandene Sicherung gelöst und die Trägerarme 5 können in den Konsolen 6 nach hinten gekippt werden. Aufgrund der relativ großen Betätigungskräfte, insbesondere aufgrund der Reibung zwischen Trägerarmen 5 und Konsolen 6 in einem Bereich mit relativ großem Durchmesser, wird ein versehentliches Kippen nach hinten auch ohne zusätzliche Sicherung verhindert.

Der vorliegend in Fahrtrichtung des Fahrzeugs links angeordnete Trägerarm 5 ist gleichzeitig Betätigungselement für die Kupplungsvorrichtung 2, während der zweite Trägerarm 5 vorliegend keine in Verbindung mit der Kupplungsvorrichtung 2 stehende Zusatzfunktion hat.

Im Folgenden werden der Aufbau und die Funktion der Kupplungsvorrichtung 2, welche dazu dient, den Lastenträger 1 mit der aufnahmeartigen Kupplung 3 sicher zu verbinden, näher beschrieben.

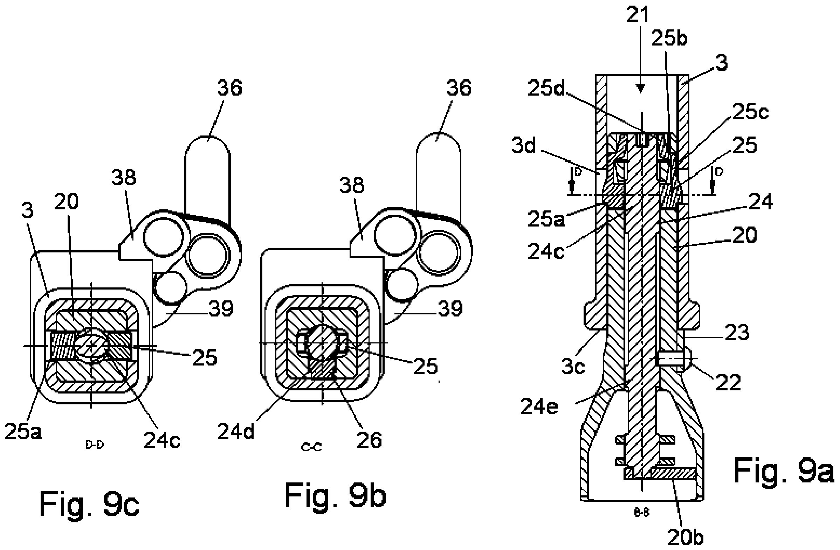

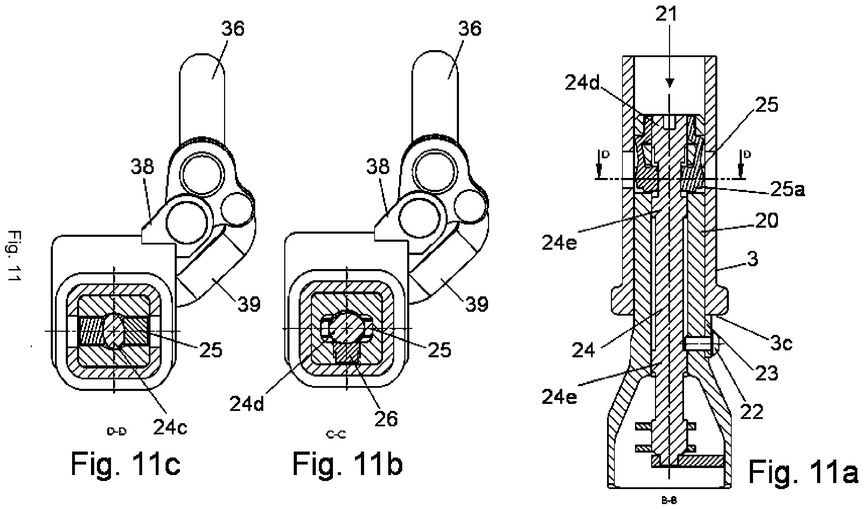

Der eigentliche Kupplungsbereich, also der Bereich, in welchem der Lastenträger 1 mit der aufnahmeartigen Kupplung 3 verbunden ist, weist als wesentliche Teile einen stationär bezüglich des zentralen Trägers 4 ausgebildeten Dorn 20 und eine relativ hierzu bewegliche Verriegelungsvorrichtung 21 auf. Für den Anbau des Lastenträgers 1 an die aufnahmeartige Kupplung 3 wird der Dorn 20 bis zu einer vorliegend mittels einer Befestigungsschraube 22 auf der Außenseite des Dorns 20 angebrachten Anschlagplatte 23 eingeschoben. Aufgrund der einander im Wesentlichen entsprechenden Außenabmessung des Dorns 20 und Innenabmessung der aufnahmeartigen Kupplung 3 ist ein Einschieben mit exakt vorgegebener Ausrichtung möglich, wobei die Einschiebtiefe durch die Anschlagplatte 23, welche an der vorderen Stirnfläche 3c der aufnahmeartigen Kupplung 3 in Anlage gelangt, definiert wird (siehe Fig. 9a und 11a).

Die Verriegelungsvorrichtung 21, welche im Wesentlichen innerhalb des Dorns 20 und innerhalb eines einstückig mit dem Dorn 20 verbundenen Übergangsbereichs 20a zum zentralen Träger 4 angeordnet ist, weist eine Nockenwelle 24, zwei Riegel 25, ein Druckstück 26 und eine Wellfeder 27 auf. Zur Betägigung der Verriegelungsvorrichtung 21 ist eine Betätigungsvorrichtung 30 vorgesehen, welche mit der Nockenwelle 24 der Verriegelungsvorrichtung 21 zusammenwirkt. Auf die Bewegungsübertragung von der Betätigungsvorrichtung 30 an die Verriegelungsvorrichtung 21 wird an späterer Stelle näher eingegangen.

Bevor näher auf die Betätigungsvorrichtung 30 eingegangen wird, wird im Folgenden die Verriegelungsvorrichtung 21 näher beschrieben.

Die Nockenwelle 24 weist einen auf der Seite des zentralen Trägers 4 angeordneten, in einer im Übergangsbereich 20a zum zentralen Träger 4 vorgesehenen Lagerplatte 20b drehbar gelagerten Lagerzapfen 24a auf. Benachbart zum Lagerzapfen 24a ist eine Verzahnung 24b ausgebildet. Es sei darauf hingewiesen, dass die Verzahnung 24b nicht notwendigerweise als verzahnter Bereich ausgebildet sein muss, sondern vielmehr zur Bewegungsübertragung die Nockenwelle 24 geeignet sein muss. Bei einer offenen Bauweise oder einem Zusammenbau von der anderen Seite her können beispielsweise nach außen vorstehende Arme die Übertragungsfunktion übernehmen.

Am kupplungsseitigen Ende der Nockenwelle 24 sind zwei um 90° verdreht zueinander angeordnete Doppelnocken 24c und 24d, jeweils gebildet durch zwei um 180° versetzt zueinander angeordnete Nocken, sowie eine zwischen den Doppelnocken 24c und der Verzahnung 24b angeordnete, zur Montage abgeflachte erste Lagerstelle 24e vorgesehen. Eine zweite Lagerstelle 24e schließt mit der ersten Lagerstelle 24e einen nicht gelagerten Bereich zwischen sich ein (siehe Fig. 11a). Die Doppelnocken 24c und 24d wirken mit den Riegeln 25 zusammen, wobei die Riegel 25 einen mit einer Nase 25a versehenen, dickeren Verriegelungsbereich 25b, einen Verbindungsbereich 25c und einen dünneren Deaktivierungsbereich 25d aufweisen. Im verriegelten Zustand des Lastenträgers 1 ragt die Nase 25a der Riegel 25 jeweils in seitliche Öffnungen 3d der aufnahmeartigen Kupplung 3, wie beispielsweise in Fig. 9a dargestellt. Da die Doppelnocken 24c von innen gegen den Verriegelungsbereich 25b drücken, sind die Nasen 25a in ihrer Stellung fixiert und verhindern ein Entnehmen des Dorns 20 aus der aufnahmeartigen Kupplung 3. Aufgrund der einander entsprechenden Profile von Dorn 20 und aufnahmeartiger Kupplung 3, der Anschlagplatte 23, die mit der Stirnfläche 3c der aufnahmeartigen Kupplung 3 zusammenwirkt, und der Nasen 25a der Riegel 25, die in die Öffnungen 3d der aufnahmeartigen Kupplung 3 ragen, besteht ein Formschluss und der Lastenträger 1 kann nicht entnommen werden.

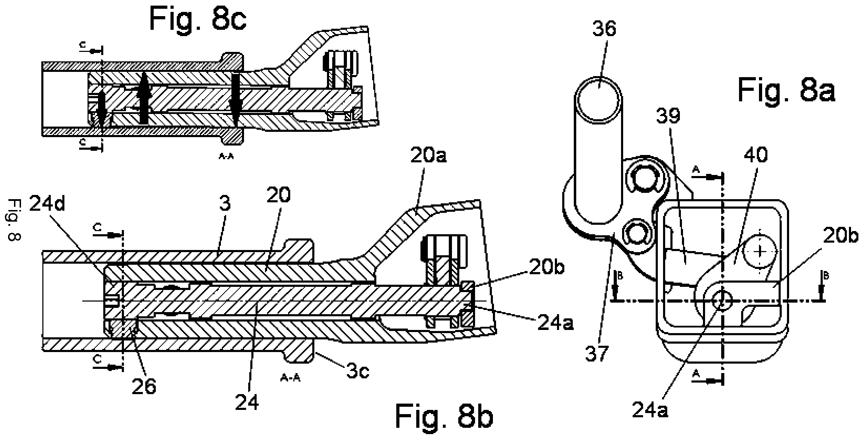

Zur Spielfreistellung des Dorns 20 ist besagtes Druckstück 26 in Verbindung mit einer Anfasung an der Oberseite des Dorns 26 vorgesehen. Zur Verdeutlichung der wirkenden Kräfte sind schematisch drei Pfeile in Fig. 8c eingezeichnet. Die Anfasung hat vorliegend einen Winkel von ca. 1° zur Längsachse des Dorns 26 und endet im Bereich des mittleren Pfeiles von Fig. 8c, d.h. der Bereich des Fasenendes bildet einen ersten Anlagebereich, wobei aufgrund der elastischen (und ggf. plastischen) Verformung der aneinander anliegenden Flächen, keine Pressungsspitzen auftreten sondern der Druck gut verteilt wird. Alternativ zu einer Spielfreistellung mittels besagter Anfasung sind auch andere Maßnahmen möglich, um eine spielfreistellende Anlage des Dorns 20 in drei Bereichen, wie in Fig. 8c dargestellt, zu realisieren, beispielsweise können ein Absatz oder eine Wölbung am Dorn 20 vorgesehen sein.

Das Druckstück 26 ragt, wie aus Fig. 8b ersichtlich, durch eine Öffnung im Dorn 20 nach unten hinaus und ist in Anlage an die Innenfläche der Aufnahmeöffnung 3a der aufnahmeartigen Kupplung 3. Es wird von oben durch den Endbereich der Nockenwelle 24 nach unten gedrückt, wobei die Nockenwelle 24 die Kraft auf die gegenüberliegende Seite des Dorns 20 weiterleitet.

Aufgrund der Gewichtskraft des Lastenträgers 1 in Verbindung mit einer leichten elastischen Verformung des Dorns 20 liegt ferner die Unterseite des Dorns 20 am vorderen Ende der Aufnahmeöffnung 3a an (rechter Pfeil). Auch in diesem Bereich treten aufgrund der elastischen (und ggf. plastischen Verformung) der aneinander anliegenden Flächen keine Pressungsspitzen auf, sondern der Druck wird gut verteilt.

Durch die drei Anlagebereiche des Dorns 20 ist derselbe spielfrei in der aufnahmeförmigen Kupplung 3 gelagert, so dass im Betrieb Klappergeräusche verhindert werden.

Im zusammengeklappten Zustand des Lastenträgers 1 befindet sich die Nockenwelle 24 in einer um ca. 90° gedrehten Stellung, so dass die Doppelnocken 24c nicht mehr von innen an die Riegel 25 anliegen, sondern der "dünne" Bereich zwischen den Doppelnocken 24c ein Einfahren der Riegel 25 ermöglicht. Das Einfahren der Riegel 25 wird durch die zweiten Doppelnocken 24d bewirkt, die aufgrund der Drehung der Nockenwelle 24 an den dünneren Deaktivierungsbereich 25d der Riegel 25 anliegen und denselben während der Drehbewegung nach außen drücken, wodurch die Riegel 25 mit ihrem kupplungsseitigen Ende radial in Bezug auf die Nockenwelle 24 nach außen gedrückt werden, so dass sie sich mit ihrem aufgrund der Drehung der Nockenwelle 24 von innen her durch die ersten Doppelnocken 24c freigegebenen Verriegelungsbereich 25b nach innen bewegt und die Nasen 25a aus den Öffnungen 3d bewegt werden. Der Lastenträger 1 kann so aus der aufnahmeartigen Kupplung 3 entnommen werden.

Im Folgenden wird die Betätigungsvorrichtung 30, welche die Verriegelungsvorrichtung 21 antreibt sowie in ihren Endstellungen hält, näher beschrieben.

Für ein definiertes Verriegeln und Sichern der Kupplungsvorrichtung 2 ist auf der kupplungsseitigen Außenseite der linken Konsole 6 eine Rastvorrichtung angeordnet, welche eine Klinke 31, die mit einem Zahnsegment 32, das am zentralen Träger 4 angebracht ist, zusammenwirkt, und eine vorgespannte Feder 33, welche als Vorspannelement dient, aufweist. Die Klinke 31 der Rastvorrichtung weist eine an der Klinke 31 angeformte Achse 31a auf, mit welcher sie in einer Lagerstelle an der Außenseite der Konsole 6 verschwenkbar gelagert ist. Die Klinke 31 weist ferner zwei sich nach außen erstreckende Enden auf, wobei an einem Ende vorliegend zwei Rastzähne 31b ausgebildet sind. Natürlich kann auch eine andere geeignete Anzahl von Rastzähnen vorgesehen sein. Das andere Ende der Klinke 31 ist in Anlage an die vorspannende Feder 33. Auf der der Feder 33 gegenüberliegenden Seite ist ein Anschlag 6b für die Klinke 31 vorgesehen, wobei die Feder 33 den entsprechenden Schenkel der Klinke 31 in Anlage an den Anschlag 6b hält.

An der Klinke 31 ist leicht versetzt zur die Klinke 31 an der Konsole 6 lagernden Achse 31a ein Bolzen 34 vorgesehen, welcher eine Mitnehmerplatte 35 schwenkbar lagert und somit eine zweite Lagerstelle bildet. Die Mitnehmerplatte 35 ist mittels eines weiteren Bolzens am gegenüberliegenden Ende zusätzlich in der Trägerarm-Schwenkachse ST schwenkbar gelagert. Die Mitnehmerplatte 35 ist ferner etwa zwischen dem Bolzen 34 und der Trägerarm-Schwenkachse ST fest mit einem Übertragungselement 36, vorliegend in Gestalt eines Rohres verbunden. Dieses Rohr kann sich bei Torsionsbelastungen etwas elastisch verformen, d.h. als Torsions- und damit als zusätzliches Ausgleichselement dient. Am anderen, kupplungsseitigen Ende des Übertragungselements 36 sind vorliegend zwei etwa dreieckförmige Platten 37 parallel und etwas beabstandet zueinander angeordnet. Die Platten 37 sind in einer Ecke mit dem Übertragungselement 36 fest, d.h. nicht verdrehbar, verbunden. Die dreieckförmigen Platten 37 sind in einer zweiten Ecke durch einen vom Übergangsbereich 20a vorstehenden, eine Lagerstelle bildenden Arm 38 mittels eines Bolzens gelagert. In der dritten Ecke ist zwischen den Platten 37 mittels eines weiteren Bolzens ein Ende eines Pleuels 39 schwenkbar gelagert. Mit dem zweiten Ende des Pleuels 39 sind schwenkbar mittels eines weiteren Bolzens zwei länglichen Kurbellaschen 40 verbunden, welche das Pleuelende zwischen sich aufnehmen. Die Kurbellaschen 40 weisen am anderen, vom Pleuel 39 beabstandeten Ende eine Öffnung auf, mit der sie formschlüssig auf der Verzahnung 24b der Nockenwelle 24 sitzen. Somit können die Kurbellaschen 40 Stellbewegungen an die Nockenwelle 24 übertragen.

Im Folgenden wird die Handhabung des Lastenträgers 1, insbesondere die Funktion der Betätigungsvorrichtung 30 in Verbindung mit der Verriegelungsvorrichtung 21 näher beschrieben. Zur Montage des Lastenträgers 1 wird der Dorn 20 in die Aufnahmeöffnung 3a der aufnahmeartigen Kupplung 3 eingeführt, bis die Anschlagplatte 23 in Anlage an die vordere Stirnfläche 3c gelangt und die Einführbewegung automatisch gestoppt wird. Hierbei sind die beiden Trägerarme 5 des Lastenträgers 1 nach oben ausgerichtet, d.h. der Lastenträger befindet sich in seiner zusammengeklappten Stellung.

Anschließend werden die beiden Trägerarme 5 heruntergeklappt, wobei vorliegend der in Fahrtrichtung rechte Trägerarm 5 keine Verriegelungsfunktion hat. Hierbei ist die Reihenfolge des Herunterklappens im Prinzip egal, es ist jedoch vorteilhaft, wenn zuerst der Trägerarm 5 heruntergeklappt wird, welcher eine Verriegelungsfunktion hat.

Durch das Herunterklappen des in Fahrtrichtung linken Trägerarms 5, ausgehend von der in Fig. 2a dargestellten Stellung in die Stellung von Fig. 1, schwenkt die Konsole 6 um die Trägerarm-Schwenkachse ST. Hierbei nimmt die Konsole 6, welche die Achse 31a der Klinke 31 lagert, die Klinke 31 und damit auch die Mitnehmerplatte 35 samt Übertragungselement 36 mit, wobei die Mitnehmerplatte 35 etwa entsprechend der Konsole 6 um die Trägerarm-Schwenkachse ST schwenkt.

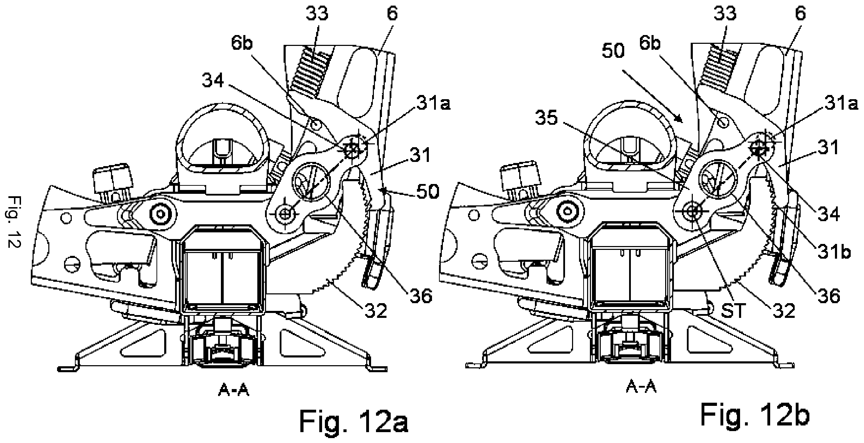

Zur Vermeidung einer Überlastung oder Beschädigung, falls der Dorn 20 nicht korrekt in die Aufnahmeöffnung 3a der Kupplung 3 eingesteckt ist, ist eine Kraftbegrenzung 50 vorgesehen, welche durch die Sperrklinke 31 mit dem Zahnsegment 32, die Feder 33, den Anschlag 6b und insbesondere die versetzte Anordnung von Achse 31a und Bolzen 34 gebildet ist. Wenn die Bedienkraft am Trägerarm 5 zu groß wird, hebt der Schwenkel der Kline 31 mit der Feder 33 vom Anschlag 6b ab und drückt die Feder 33 stärker zusammen. Dies führt zu einer Verdrehung der Sperrklinke 31, wodurch die Rastzähne 31b in Eingriff mit den Zähnen des Zahnsegments 32 gelangen und die Bewegung blockieren (Fig. 12b). Eine weitere Erhöhung der Kraft führt zu einer Verstärkung des Zahneingriffs. So wird ein Herabschwenken der Konsole 6 samt dem in ihr aufgenommenen Trägerarm 5 blockiert.

Eine leichte Entlastung löst den Eingriff und das Herunterklappen des Trägerarms 5 samt Konsole 6 kann fortgesetzt werden (Fig. 12a), sofern die Bedienkraft nicht zu groß wird. Durch die Dimensionierung der Feder 33 kann sichergestellt werden, dass ausreichend Kraft zur Betätigung der Verriegelungsvorrichtung 21 aufgebracht, aber eine Beschädigung derselben sicher verhindert werden kann.

Im Prinzip kann die Kraftbegrenzung 50 mit Sperrklinke 31, Zahnsegment 32, Feder 33, Anschlag 6b, Achse 31a und Bolzen 34 auch entfallen, so dass die Mitnehmerplatte 35 Teil der Konsole 6 sein kann oder das Übertragungselement 36 direkt an der Konsole 6 angebracht sein kann.

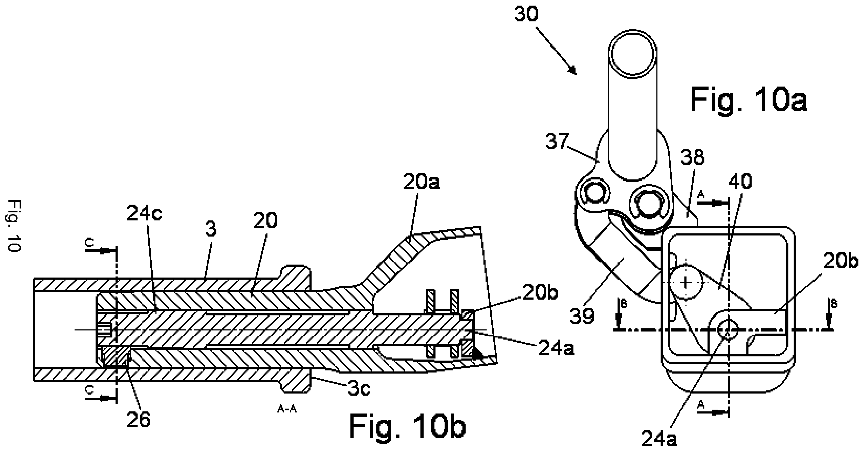

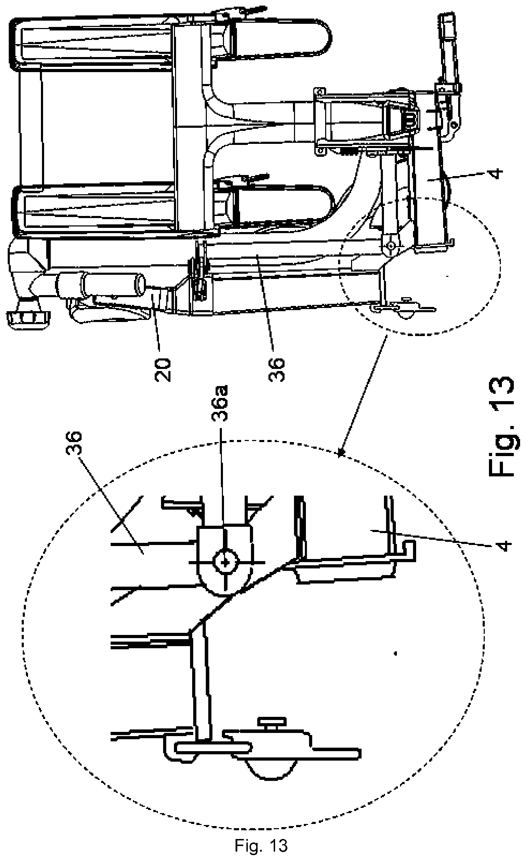

Das Herabschwenken der Mitnehmerplatte 35, bewirkt eine entsprechende Bewegung des Übertragungselements 36, welche über die dreieckförmige Platten 37, die mit einer Ecke am starren Arm 38 des Übergangsbereichs 20a des Dorns 20 gelagert sind, an die das Pleuel 39 übertragen, wobei eine Schubbewegung auf die Kurbellasche 40 überträgt (siehe insbesondere Fig. 10a und 13). Die Kurbellasche 40 dreht sich um ca. 90° um die Mittellängsachse der Nockenwelle 24 und nimmt aufgrund der formschlüssigen Verbindung bei der Drehbewegung die Nockenwelle 24 mit.

Aufgrund der Drehbewegung der Nockenwelle 24 verändert sich die Position der Doppelnocken 24c und 24d innerhalb des Dorns 20. So werden die Nasen 25a der Riegel 25 aus der Stellung, wie sie in Fig. 11b dargestellt ist, nach außen gedrückt, wie in Fig. 9c dargestellt, wobei sie in die Verriegelungsöffnungen 3b der aufnahmeartigen Kupplung 3 eindringen und sich am Rand der Verriegelungsöffnungen 3b abstützen, wie in Fig. 9a dargestellt. Gleichzeitig gibt der andere Doppelnocken 24d den Deaktivierungsbereich 25d der Riegel 25 frei, so dass dieser aus seiner nach außen gedrückten Position, wie in Fig. 11b dargestellt, sich weiter nach innen bewegen kann, wie in Fig. 9a dargestellt.

In diesem einseitig aufgeklappten Zustand des Lastenträgers 1 ist, allein durch die eine Schwenkbewegung der Konsole 6 samt Trägerarm 5 die Kupplungsvorrichtung 2 somit vollständig verriegelt, gespannt und in der aufnahmeartigen Kupplung 3 gesichert.

Das nachfolgende Herabschwenken der zweiten Konsole 6 samt zweitem Trägerarm 5 und dessen entsprechendes Verriegeln in der horizontalen Stellung, um den Lastenträger 1 einsatzbereit zu machen, hat keinen Einfluss mehr auf das Spannen der Kupplungsvorrichtung 2. Die Trägerarme 5 (oder die Konsolen 6) können in der aufgeklappten Stellung zusätzlich mit einer Sicherung gesichert werden, um ein ungewolltes Lösen sicher vermeiden zu können. Eine derartige zusätzliche Sicherung ist vorteilhaft, insbesondere wenn der Lastenträger 1 im unbelasteten Zustand benutzt wird, jedoch nicht zwingend notwendig.

Im Prinzip kann auch die zweite Konsole 6 samt zweitem Trägerarm 5 zuerst herabgeschwenkt und verriegelt werden.

Das Abbauen des Lastenträgers 1 von der Anhängerkupplung 3 erfolgt durch Entfernen der zusätzlichen Sicherung, sofern vorgesehen, und Hochklappen der (spannfunktionslosen) Konsole 6 samt Trägerarm 5. Anschließend wird die zweite Konsole 6 samt Trägerarm 5 hochgeklappt, wodurch die Mitnehmerplatte 35 um die Trägerarm-Schwenkachse ST nach oben geschwenkt wird und das Übertragungselement 36 mitnimmt. Die Bewegung des Übertragungselements 36 wird über die dreieckförmigen Platten 37, die mit einer Ecke am starren Arm 38 des Übergangsbereichs 20a des Dorns 20 gelagert sind, an das Pleuel 39 übertragen, welches eine Zugbewegung auf die Kurbellasche 40 überträgt (siehe insbesondere Fig. 8a und 10a). Die Kurbellasche 40 dreht sich um ca. 90° um die Mittellängsachse der Nockenwelle 24 zurück und nimmt aufgrund der formschlüssigen Verbindung bei der Drehbewegung die Nockenwelle 24 mit.

Aufgrund der Drehbewegung der Nockenwelle 24 verändert sich wiederum die Position der Doppelnocken 24c und 24d innerhalb des Dorns 20. So drückt der Doppelnocken 24d den Deaktivierungsbereich 25d der Riegel 25 nach außen, wodurch der Riegel 25 leicht kippt und die Nasen 25a der Riegel 25 aus der Stellung, wie sie in Fig. 9a dargestellt ist, nach innen zurückgeholt werden, wie in Fig. 11a dargestellt, wobei die Nasen 25a der Riegel 25 aus den Verriegelungsöffnungen 3b der aufnahmeartigen Kupplung 3 gelangen und den Lastenträger 1 freigeben. Der Lastenträger 1 kann nun in der zusammengeklappten Stellung vom Fahrzeug entfernt werden.

Wie aus der vorstehenden Funktionsbeschreibung offensichtlich ist, bildet die Betätigungsvorrichtung 21 in Verbindung mit der Verriegelungsvorrichtung 30 eine Getriebeanordnung, welche eine einfache Schwenkbewegung in eine Aus- bzw. Einfahrbewegung von Riegeln 25 umsetzt.

Vorliegend handelt es sich bei der Getriebeanordnung um eine Kombination aus Hebel- und Kurvengetriebe. Im Prinzip ist jedoch auch eine Umsetzung der Bewegung auch durch andere Arten von Getrieben möglich.

Der Lastenträger 1 gemäß dem vorliegenden Ausführungsbeispiel ist ferner um eine in y-Richtung verlaufende Achse vom Fahrzeug weg abkippbar, um das Be- und Entladen zu erleichtern oder den Kofferraum des Fahrzeugs zugänglich zu machen (siehe Fig. 2b). Hierfür sind eine Kippvorrichtung 60 mit einem Pedal 61 vorgesehen. Das Kippen ist dadurch möglich, dass die Trägerarme 5 miteinander fluchtend in den Konsolen 6 aufgenommen sind. Ferner sind die Trägerarme 5 vorliegend miteinander über Gelenke (nicht dargestellt) verbunden, so dass in zusammengeklappter Stellung kein Kippen möglich ist.

Beim vorstehend beschriebenen Ausführungsbeispiel wird der Lastenträger 1 in beiden Fällen in der Regel im vollständig aufgeklappten Zustand benutzt. Im Prinzip kann aber, dadurch, dass der zweite Hebel (Konsole, Trägerarm, Stellbereich) keine Spannfunktion haben, derselbe auch im hochgeklappten Zustand benutzt werden. Ferner kann, gemäß einer weiteren, nicht in der Zeichnung dargestellten Variante der zweite Hebel auch vollständig entfallen.

Gemäß einer in Fig. 13 dargestellten Variante eines erfindungsgemäßen Lastenträgers 1 ist - als einziger Unterschied zum vorstehend beschreibenen Ausführungsbeispiel - zusätzlich noch der Kupplungsbereich 2 hochklappbar ausgebildet, so dass sich ein besonders kleines Packmaß des Lastenträgers 1 im zusammengeklappten Zustand ergibt. Hierfür ist der zentrale Träger 4 zweiteilig ausgebildet und das Übertragungselement 36 weist ein Gelenk 36a auf.

### Bezugszeichenliste

1 Lastenträger
2 Kupplungsvorrichtung
3 aufnahmeartige Kupplung ("receiver type hitch")
3a Aufnahmeöffnung
3b Verriegelungsöffnung
3c vordere Stirnfläche
3d Öffnung
4 zentraler Träger
5 Trägerarm
6 Konsole (für Trägerarm)
6b Anschlag
7 Stützbügel
8 Stellbereich
10 Hebel
20 Dorn
20a Übergangsbereich
20b Lagerplatte
21 Verriegelungsvorrichtung
22 Befestigungsschraube
23 Anschlagplatte
24 Nockenwelle
24a Lagerzapfen
24b Verzahnung
24c erste Doppelnocken
24d zweite Doppelnocken
24e Lagerstelle
25 Riegel
25a Nase
25b Verriegelungsbereich
25c Verbindungsbereich
25d Deaktivierungsbereich
26 Druckstück
27 Wellfeder
30 Betätigungsvorrichtung
31 Klinke
31a Achse
31b Rastzahn
32 Zahnsegment
33 Feder
34 Bolzen
35 Mitnehmerplatte
36 Übertragungselement
36a Gelenk
37 dreieckförmige Platten
38 Arm
39 Pleuel
40Kurbellasche
50 Kraftbegrenzung
60 Kippvorrichtung
61 Pedal
ST Trägerarm-Schwenkachse

## Patentansprüche

1. Zusammenklappbarer Lastenträger (1) mit mindestens einem Stellbereich (8), auf welchen zu transportierende Last, insbesondere mindestens ein Fahrrad, stellbar ist, und einer Kupplungsvorrichtung (2), welcher an einer aufnahmeartigen Kupplung (3) mit einer im Wesentlichen quadratischen Öffnung (3a) lösbar anbringbar ist, **dadurch gekennzeichnet, dass** das Ausfahren mindestens eines Riegels (25) und Verriegeln des mindestens einen Riegels (25) mit einer Verriegelungsvorrichtung (21) durch eine Schwenkbewegung eines einzigen als Bedienelement dienenden Hebels (10) um eine Schwenkachse (ST) erfolgt, wobei der als Bedienelement dienende Hebel (10) gleichzeitig auch den Stellbereich (8) bildet.

2. Lastenträger nach Anspruch 1, **dadurch gekennzeichnet, dass** die Schwenkbewegung des Hebels (10) mittels einer Getriebeanordnung an die Kupplungsvorrichtung (2) übertragbar ist, und die Getriebeanordnung die Schwenkbewegung des Hebels (10) nach unten in ein Ausfahren mindestens eines Riegels (25), welcher Teil der Verriegelungsvorrichtung (21) ist, und die Schwenkbewegung des Hebels (10) nach oben in eine Einfahrbewegung besagten Riegels (25) umsetzt.

3. Lastenträger nach Anspruch 2, **dadurch gekennzeichnet, dass** als Teil der Getriebeanordnung eine Nockenwelle (24) vorgesehen ist, welche mindestens einen Nocken aufweist, der mit einem Verriegelungsbereich (25b) des Riegel (25) zusammenwirkt.

4. Lastenträger nach Anspruch 3, **dadurch gekennzeichnet, dass** zwei Riegel (25) vorgesehen sind, und der Nocken Teil eines ersten Doppelnockens (24c) ist, welcher durch zwei um 180° versetzt zueinander angeordnete Nocken gebildet ist, wobei jeder der Nocken des Doppelnocken (24c) mit einem Verriegelungsbereich (25b) eines diesem Nocken zugeordneten Riegels (25) zusammenwirkt.

5. Lastenträger nach Anspruch 4, **dadurch gekennzeichnet, dass** die Nockenwelle (24) einen zweiten Doppelnocken (24d), gebildet durch zwei weitere, um 180° versetzt zueinander angeordnete Nocken, aufweist, der mit einem Deaktivierungsbereich (25d) des diesem Nocken zugeordneten Riegels (25) zusammenwirkt.

6. Lastenträger nach Anspruch 5, **dadurch gekennzeichnet, dass** der erste Doppelnocken (24c) in einem Winkel von 90° versetzt zum zweiten Doppelnocken (24d) angeordnet ist.

7. Lastenträger nach einem der vorhergehenden Ansprüche, **dadurch gekennzeichnet, dass** der Lastenträger (1) eine Kraftbegrenzung (50) aufweist, welche ein Verschwenken des Hebels (10) um eine Trägerarm-Schwenkachse (ST) nach unten bei Überschreiten einer vorgegebenen Kraft verhindert.

8. Lastenträger nach Anspruch 7, **dadurch gekennzeichnet, dass** die Kraftbegrenzung (50) eine verschwenkbar um eine erste Lagerstelle (6a) am Hebel (10) gelagerte Klinke (31), ein in Bezug auf einen zentralen Träger (4) des Lastenträgers (1) stationär angebrachtes Zahnsegment (32) mit welchem die Klinke (31) zusammenwirkt, und eine Vorspannelement aufweist, dass
die Klinke (31) ihrerseits eine verschwenkbar in der Trägerarm-Schwenkachse (ST) gelagerte Mitnehmerplatte (35) in einer zweiten Lagerstelle lagert, wobei die erste und zweite Lagerstelle der Klinke (31) versetzt zueinander angeordnet sind, und dass
die Mitnehmerplatte (35) mit einem Übertragungselement (36) zur Bewegungsübertragung der Schwenkbewegung des Hebels (10) über eine nachfolgende Getriebeanordnung an die Verriegelungsvorrichtung (21) verbunden ist.

9. Lastenträger nach einem der vorhergehenden Ansprüche, **dadurch gekennzeichnet, dass** der Lastenträger (1) eine Spielfreistellung aufweist.

10. Lastenträger nach Anspruch 9, **dadurch gekennzeichnet, dass** die Spielfreistellung einen Absatz, eine Wölbung oder eine Anfasung am Dorn (20) und ein mit der Nockenwelle (24) zusammenwirkendes Druckstück (26) aufweist.

11. Lastenträger nach Anspruch 10, **dadurch gekennzeichnet, dass** die Anfasung einen Winkel von max. 2°, insbesondere ca. 1°, aufweist.

12. Lastenträger nach einem der vorhergehenden Ansprüche, **dadurch gekennzeichnet, dass** die Betätigungsvorrichtung (30) ein exzentrisch gelagertes Übertragungselement (36) aufweist.

13. Lastenträger nach Anspruch 12, **dadurch gekennzeichnet, dass** das Übergangselement (36) durch ein Rohr gebildet ist.

14. Lastenträger nach einem der vorhergehenden Ansprüche, **dadurch gekennzeichnet, dass** der Lastenträger (1) einen zentralen Träger (4) aufweist, welcher im kupplungsseitigen Endbereich hochklappbar ausgebildet ist, und dass ein Übertragungselement (36) vorgesehen ist, welches ein Gelenk (36a) aufweist, wobei die Schwenkachse von Übertragungselement (36) und den beiden relativ zueinander beweglichen Bereichen des zentralen Trägers (4) zusammenfallen.

15. Lastenträger nach einem der vorhergehenden Ansprüche, **dadurch gekennzeichnet, dass** der Lastenträger (1) Trägerarme (5) aufweist, welche die Stellbereiche (8) bilden, wobei die Trägerarme (5) in Konsolen (6) angeordnet sind, welche im aufgeklappten Zustand eine Kippbewegung der Stellbereiche (8) nach hinten ermöglichen, und wobei eine zusätzliche Sicherung vorgesehen ist, um ein ungewolltes Kippen nach hinten zu verhindern.

## Claims

1. Foldable load carrier (1) with at least one adjusting range (8), on which load to be transported, especially at least one bicycle, can be placed, and a coupling mechanism (2), which can be detachably attached at a receptacle-like coupling (3) with a substantially square opening (3a), **characterised in that** extracting at least one latch (25) and locking of the at least one latch (25) with a locking device (21) is done by a swinging movement around a pivoting axis (ST) of a single lever (10) serving as control element, in which the lever (10) serving as control element forms at the same time also the adjusting range (8).

2. Load carrier according to claim 1, **characterised in that** the swinging movement of the lever (10) by means of a gearing can be transmitted to the coupling mechanism (2), and that the gearing transforms the swinging movement of the lever (10) downwards into an extraction of at least one latch (25), which is part of the locking device (21), and the swinging movement of the lever (10) upwards into a retracting movement of said latch (25).

3. Load carrier according to claim 2, **characterised in that** as a part of the gearing a camshaft (24) is provided, which presents at least one cam that interacts with a locking area (25b) of the latch (25).

4. Load carrier according to claim 3, **characterised in that** two latches (25) are provided, and that the cam is part of a first double cam (24c) which is formed by two cams displaced towards each other by 180°, in which each of the cams of the double cam (24c) interacts with a locking area (25b) of a latch (25) assigned to this cam.

5. Load carrier according to claim 4, **characterised in that** the camshaft (24) presents a second double cam (24d), formed by two more cams displaced towards each other by 180°, that interacts with a deactivation area (25d) of the latch (25) assigned to this cam.

6. Load carrier according to claim 5, **characterised in that** the first double cam (24c) is displaced by an angle of 90° with respect to the second double cam (24d).

7. Load carrier according to any of the preceding claims, **characterised in that** the load carrier (1) presents a force limitation (50) which prevents a pivoting of the lever (10) around a carrier arm pivoting axis (ST) downwards when exceeding a preset force.

8. Load carrier according to claim 7, **characterised in that** the force limitation (50) presents a detent (31) supported pivotably around a first bearing (6a) on the lever (10), a tooth segment (32) applied stationarily in relation to a central carrier (4) of the load carrier (1) with which the detent (31) interacts, and a prestressing element, **in that** the detent (31) for its part bears a follower plate (35) supported pivotably in the carrier arm pivoting axis (ST) in a second bearing, the first and second bearing of the detent (31) being arranged displaced towards each other, and **in that** the follower plate (35) is connected to the locking device (21) with a transmission element (36) for transmission of the swinging movement of the lever (10) by a following gearing.

9. Load carrier according to any of the preceding claims, **characterised in that** the load carrier (1) presents a backlash-free position.

10. Load carrier according to claim 9, **characterised in that** the backlash-free position presents a shoulder, a camber or a chamfer at the mandrel (20) and a pressure piece (26) interacting with the camshaft (24).

11. Load carrier according to claim 10, **characterised in that** the chamfer presents an angle of max. 2°, especially ca. 1°.

12. Load carrier according to any of the preceding claims, **characterised in that** the operating means (30) presents an off-centre transmission element (36).

13. Load carrier according to claim 12, **characterised in that** the transition element (36) is formed by a tube.

14. Load carrier according to any of the preceding claims, **characterised in that** the load carrier (1) presents a central carrier (4), which in the coupling side end zone can be folded upwards, and that a transmission element (36) is provided, which presents a joint (36a), wherein the pivoting axis of the transmission element (36) and the two areas movable in relation to each other of the central carrier (4) coincide.

15. Load carrier according to any of the preceding claims, **characterised in that** the load carrier (1) presents carrier arms (5), which form the adjusting ranges (8), wherein the carrier arms (5) are arranged in consoles (6), which in the unfolded state allow a tilting movement of the adjusting ranges (8) backwards, and wherein an additional security device is provided, in order to prevent an unwanted tilting backwards.

## Revendications

1. Porte-charges pliable (1) avec au moins une plage de réglage (8) sur laquelle une charge à transporter, en particulier au moins une bicyclette, peut être positionnée, et un dispositif d'accouplement (2), pouvant être fixé de manière amovible sur un couplage de type réceptacle (3) ayant une ouverture substantiellement carrée (3a), **caractérisé en ce que** la libération d'au moins un verrou (25) et le verrouillage dudit verrou (25) au moyen d'un dispositif de verrouillage (21) est effectué au moyen d'un mouvement pivotant autour d'un axe de pivot (ST) d'un levier unique (10) servant d'élément de commande, dans lequel le levier (10) servant d'élément de commande forme en même temps la plage de réglage (8).

2. Le porte-charge selon la revendication 1, **caractérisé en ce que** le mouvement de pivotement du levier (10) au moyen d'un engrenage peut être transmis au mécanisme d'accouplement (2), et que l'engrenage transforme le mouvement de pivotement du levier (10) vers le bas en une libération d'au moins un verrou (25), qui est partie du dispositif de verrouillage (21), et transforme le mouvement de pivot du levier (10) vers le haut en un mouvement de rétractation dudit verrou (25).

3. Le porte-charge selon la revendication 2, **caractérisé en ce qu'**il comporte un arbre à cames (24) faisant partie du dispositif à engrenages, lequel présente au moins une came qui coopère avec une partie de verrouillage (25b) du verrou (25).

4. Le porte-charge selon la revendication 3, **caractérisé en ce que** deux verrous (25) sont prévus, et **en ce que** la came fait partie d'une première double came (24c) formée au moyen de deux cames mutuellement décalées de 180°, chacune des cames au sein de la double came (24c) coopérant avec une partie de verrouillage (25b) d'un verrou (25) associé à cette came.

5. Le porte-charge selon la revendication 4, **caractérisé en ce que** l'arbre à cames (24) présente une seconde double came (24d) formée par deux autres cames décalées de 180°, laquelle interagit avec une zone de désactivation (25d) du verrou (25) affecté à cette came.

6. Le porte-charge selon la revendication 5, **caractérisé en ce que** la première double came (24c) est décalée d'un angle de 90° par rapport à la deuxième double came (24d).

7. Le porte-charge selon l'une des revendications précédentes, **caractérisé en ce que** le porte-charge (1) présente un limiteur de force (50) empêchant le pivotement vers le bas du levier (10) autour d'un axe de pivotement (ST) du bras de support lorsqu'une force prédéterminée est dépassée.

8. Le porte-charge selon la revendication 7, **caractérisé en ce que** le limiteur de force (50) présente un cliquet (31) monté de manière pivotante sur un premier palier (6a) sur le levier (10), un segment denté (32) appliqué de manière stationnaire relativement à un support central (4) du porte charge (1) avec lequel le cliquet interagit, et un élément de précontrainte, et **en ce que** le cliquet (31) support une plaque suivante (35) supportée de manière pivotante dans l'axe de pivotement du bras de support (ST) dans un second palier, les premier et second paliers du cliquet (31) étant disposés décalés l'un vis-à-vis de l'autre, et **en ce que** la plaque suivante (35) est reliée au dispositif de verrouillage (21) avec un élément de transmission (36) pour la transmission du mouvement de pivotement du levier (10) au moyen d'un engrenage suivant.

9. Le porte-charge selon l'une des revendications précédentes, **caractérisé en ce que** le porte-charge (1) comporte une position libre de jeu.

10. Le porte-charge selon la revendication 9, **caractérisé en ce que** la position libre de jeu comporte un épaulement, une courbure ou un chanfrein sur le mandrin (20), ainsi qu'un élément de pression (26) coopérant avec l'arbre à cames (24).

11. Le porte-charge selon la revendication 10, **caractérisé en ce que** le chanfreinage d'un angle de max. 2°, et particulièrement environ 1°.

12. Le porte-charges selon l'une des revendications précédentes, **caractérisé en ce que** le dispositif d'actionnement (30) présente un élément de transmission (36) monté de manière excentrique.

13. Le porte-charge selon la revendication 12, **caractérisé en ce que** l'élément de transition (36) est formé par un tube.

14. Le porte-charges selon l'une des revendications précédentes, **caractérisé en ce que** le porte-charges (1) comporte un support central (4) destiné à être replié dans la zone d'extrémité du côté couplage et **en ce qu'**un élément de transmission (36) comporte un joint (36a), dans lequel coïncident l'axe de pivotement de l'élément de transmission (36) ainsi que les deux parties mobiles du support central (4) en relation l'une vis-à-vis de l'autre.

15. Le porte-charges selon l'une des revendications précédentes, **caractérisé en ce que** le porte-charges (1) présente des bras de support (5), formant les plages de réglage (8), dans lequel les bras de support (5) sont disposés dans des consoles (6), qui dans l'état non plié permettent un mouvement de basculement vers l'arrière des plages de réglage (8), et dans lequel un dispositif de sécurité supplémentaire est fourni, pour éviter tout basculement accidentel vers l'arrière.
